# FASCICULE DE BREVET EUROPEEN

(11) **EP 1 739 927 B1**
(45) Date de publication et mention de la délivrance du brevet: **17.12.2014**
(21) Numéro de dépôt: 06300729.8
(22) Date de dépôt: 27.06.2006
(51) Int. Cl.: H04L 29/08

(54) **Procédé de communication entre un dispositif éditeur et un dispositif émetteur**
Verfahren zur Kommunikation zwischen einer Editiervorrichtung und einer Sendevorrichtung
Method for communication between an editing device and a transmitting device

(30) Priorité: 01.07.2005 FR 0552012
(43) Date de publication de la demande: 03.01.2007
(73) Titulaire: SAGEMCOM DOCUMENTS SAS, 92500 Rueil Malmaison (FR)
(72) Inventeur: Kanaan, Nadi, 75016, PARIS (FR)
(74) Mandataire: Schmit, Christian Norbert Marie

(56) Documents cités:
- EP-A1- 1 450 517
- US-A1- 2002 013 869
- "SPECIFICATION OF THE BLUETOOTH SYSTEM, CORE, VERSION 1.0 B, SERVICE DISCOVERY PROTOCOL (SDP)", INTERNET CITATION, décembre 1999 (1999-12), XP002176975, Extrait de l'Internet: URL:www.bluetooth.com [extrait le 2001-09-07]
- RAKOTONIRAINY A ET AL: "RESOURCE DISCOVERY FOR PERVASIVE ENVIRONMENTS", LECTURE NOTES IN COMPUTER SCIENCE/COMPUTATIONAL SCIENCE (CPAIOR 2011), SPRINGER, DE, vol. 2519, 1 janvier 2002 (2002-01-01), pages 866-883, XP007900027, DOI: 10.1007/3-540-36124-3_57 ISBN: 978-3-540-24128-7

## Description

La présente invention a pour objet un procédé de communication entre un dispositif éditeur, que par la suite on dira fixe, et un dispositif émetteur qui sera et qu'on dira mobile. En pratique, il est envisageable que le dispositif éditeur soit lui-même mobile, encore que la plupart du temps, il sera effectivement fixe. Par dispositif éditeur, on comprendra soit une imprimante et dans ce cas, l'édition est une impression papier, soit un moniteur de visualisation, et dans ce cas, l'édition est une édition de visualisation, soit encore un dispositif de diffusion acoustique, et l'édition est alors sonore. Le dispositif mobile émetteur sera quant à lui un téléphone mobile, un assistant personnel mémorisant des données, un micro-ordinateur portable ou tout autre dispositif de ce type. L'invention sera décrite en référence à un téléphone mobile mais tout autre dispositif mobile est concerné.

Le but de l'invention est de faciliter l'utilisation des dispositifs mobiles qui seront émetteurs d'information, ces informations étant destinées à être éditées sur le dispositif éditeur qui en général sera fixe. Cette terminologie sera utilisée dans la suite de la description sans induire de limitation.

Dans l'état de la technique, notamment dans le cas où on voudrait imprimer des photographies prises à l'aide d'un téléphone mobile, il est prévu de transférer des informations à éditer à un micro-ordinateur, lui-même relié à un moyen d'édition correspondant. La liaison entre le téléphone mobile (dispositif mobile) et le micro-ordinateur (dispositif fixe) est normalement de type filaire, en particulier selon un protocole USB, ou hertzienne, par liaison de type Bluetooth, Wifi ou PPP. Elle pourrait être optique ou acoustique ou autre. Avec le micro-ordinateur, il est possible de disposer une copie des informations, de traiter cette copie et de la faire éditer par le dispositif d'édition. Un tel procédé présente l'inconvénient de nécessiter la présence de l'organe intermédiaire micro-ordinateur.

Il est aussi connu d'organiser la communication directement entre le dispositif mobile et le dispositif fixe. Dans ce cas, cette communication sera de préférence de type Bluetooth, ou PPP, ou Wifi, encore qu'une connexion de type USB directe soit également possible. Un des problèmes présentés par un tel type de communication directe peut se situer dans le fait que le

dispositif éditeur, par exemple une imprimante à bas coût, serait dépourvu de moyen de visualisation de son menu d'utilisation, voire dépourvue de menu d'utilisation tout court. Dans ce cas, la procédure à suivre pour imprimer une photographie consiste à effectuer des tentatives avec le dispositif mobile en vue de solliciter le dispositif fixe. Au fur et à mesure des tentatives et des gaspillages de matières et de temps correspondant, on est alors amené à modifier des paramètres relatifs à l'information transmise, pour qu'elle soit éditée correctement par le dispositif d'édition.

Ces tentatives peuvent se solder par des échecs complets, le dispositif d'édition n'effectuant aucune tâche correspondant à une communication reçue. Plus généralement, l'échec est partiel, en ce sens que la reproduction par le dispositif d'édition des informations transmises est mal adaptée, de mauvaise qualité ou autre. En particulier, dans un exemple simpliste, on peut comprendre que l'édition dans un format paysage d'une photographie présentée en portrait (ou l'inverse) ne convient pas, l'image étant tronquée ou rapetissée, et que la tentative doit être relancée en choisissant un autre mode d'édition.

Dans d'autres cas, la tentative ne pourra jamais aboutir parce que, tout simplement, le dispositif d'édition n'est pas capable d'effectuer les traitements qu'on voudrait lui demander. Ainsi, par exemple, pour une photographie d'un individu, l'édition (l'impression) de cette photographie au format photos d'identité (par exemple avec 8 ou 16 photographies par page) peut ne pas être possible si l'imprimante n'est pas capable d'effectuer un traitement correspondant. Autrement dit, dans ce cas particulier, il ne suffit pas que le téléphone mobile envoie l'information d'image, avec en plus l'instruction d'avoir à réaliser des photos d'identité, pour que l'imprimante les réalise. Si elle n'est pas prévue pour réduire le format des photographies et pour en imprimer plusieurs sur une même page, aucune tentative ne pourra être réussie.

De ce fait, la communication entre les dispositifs mobiles et les dispositifs fixes est délicate.

On connaît dans l'état de la technique la demande de brevet européen N° EP 1 450 517, la demande de brevet américain N° US 2002/013869, l'extrait de la norme Bluetooth *« Specificafion of the Bluetooth system, Core, Version 1.0 B, Service Discovery Protocol (SDP) - 1999-12-01* », et l'article technique *«Resource Discovery for Pervasive Environments* » (Rakotonirainy et al.).

Dans l'invention, pour remédier aux problèmes cités ci-dessus, on prévoit, pour une telle communication, de faire reconnaître par le dispositif mobile les aptitudes, les capacités, d'édition du dispositif fixe. Ainsi dans l'invention, au cours d'une première phase préalable de reconnaissance, le dispositif mobile reçoit les informations caractéristiques du dispositif fixe. Ces informations caractéristiques concernent les possibilités d'édition du dispositif d'édition fixe. En agissant ainsi, le dispositif mobile (le téléphone mobile) est capable de lancer efficacement des éditions sans avoir à effectuer de multiples tentatives.

Afin que ces problèmes d'adaptation soient définitivement résolus, on prévoit dans l'invention, au cours de cette première reconnaissance, de mémoriser durablement les caractéristiques du dispositif d'édition dans le dispositif mobile. En pratique, la première reconnaissance peut être une reconnaissance de type radioélectrique mais elle peut également être une reconnaissance avec une liaison préalable de type filaire, par exemple selon un protocole Pictbridge, voire USB. Cette liaison est de préférence une liaison utilisant un protocole d'échange complexe permettant l'échange d'informations riches. Dans ce cas, le dispositif d'édition fixe transmet au téléphone mobile, de préférence en plus de ses caractéristiques d'édition, son identification, afin que le téléphone mobile puisse, à chaque connexion à ce dispositif d'édition, savoir ce dont ce dispositif d'édition est capable.

En agissant ainsi, bien entendu, de préférence, on pourra bloquer dans le téléphone mobile les tentatives d'édition qui sont vouées à l'échec, complet ou partiel, du fait de l'inadaptation.

L'invention a donc pour objet un procédé de communication entre un dispositif fixe éditeur et un dispositif mobile émetteur comportant les étapes définies dans les revendications 1 à 14.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : la représentation d'un système de communication permettant de mettre en oeuvre le procédé de communication de l'invention ;
- Figure 2 : des étapes décisives d'un programme mis en oeuvre dans le dispositif mobile pour réaliser le procédé de l'invention;
- Figure 3 : un perfectionnement du programme du dispositif mobile ;
- Figures 4 et 5 : la nature et la forme d'un message de transmission préalable de caractéristiques du dispositif fixe au dispositif mobile.

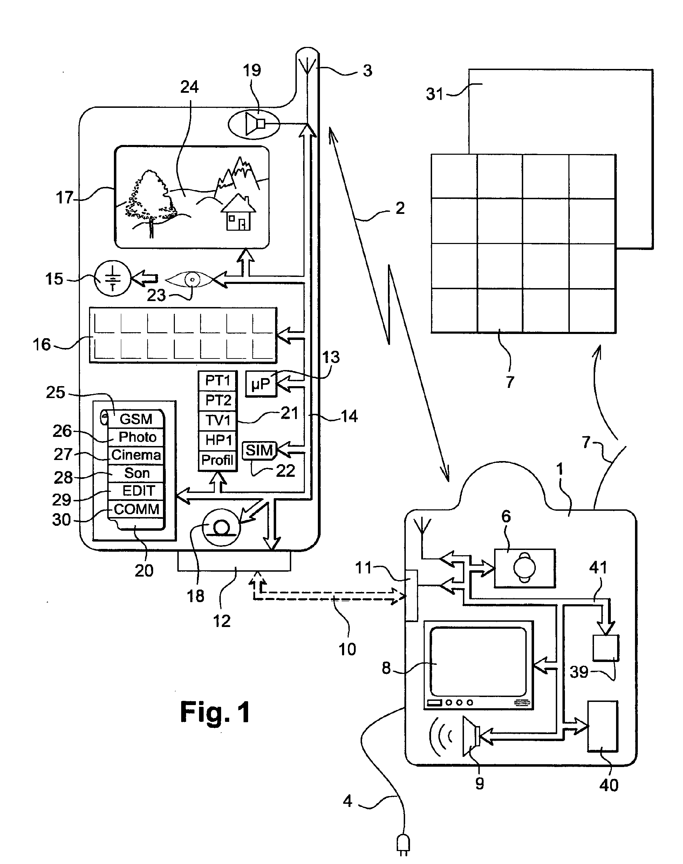

La figure 1 montre un système utilisable pour mettre en oeuvre le procédé de l'invention. Ce système comporte un dispositif fixe 1 destiné à entrer en relation, notamment par voie radioélectrique 2 avec un dispositif mobile 3. Dans un exemple, le dispositif éditeur 1 est réellement fixe parce qu'il est relié au réseau électrique domestique par une connexion d'alimentation 4. Cependant, il est possible que le dispositif d'édition 1 soit lui-même mobile et monté sur batterie. Dans la pratique, il sera plutôt considéré comme fixe parce qu'en tant que dispositif d'édition, il a besoin de beaucoup de puissance et que cette puissance disponible importante s'accorde mal avec le caractère mobile. Il serait toutefois envisageable que le dispositif d'édition 1 soit également mobile. Dans la suite de l'exposé, il sera dit fixe au sens où il est fixe par rapport au dispositif mobile qui se rapproche de lui.

Le dispositif d'édition 1 peut, dans un cas, être une imprimante 6 produisant une impression sur une feuille 7. Il peut également être un dispositif de visualisation 8 ou un dispositif de diffusion sonore 9. Le dispositif d'édition 1 peut également avoir été connecté préalablement au dispositif mobile émetteur 3 par une liaison filaire 10 reliant une interface 11 du dispositif 1 à une interface 12 du dispositif 3.

Dans un exemple, le dispositif 3 est un téléphone mobile comportant, d'une manière essentielle, un microprocesseur 13 relié par un bus 14 de données, d'adresses, de commande et d'alimentation à une batterie 15, un clavier 16, un écran 17, un microphone 18, un haut-parleur 19, une mémoire programme 20 et une mémoire de données 21. Dans le cadre de la téléphonie mobile notamment de type GSM, le téléphone mobile 3 est en relation avec un circuit SIM amovible 22 comportant lui-même un système informatique du même type que celui du téléphone mobile 1, ainsi qu'une mémoire de données contenant des informations relatives à l'abonnement du téléphone mobile. Le dispositif 3 comporte, dans un exemple pour illustrer l'invention, également une caméra 23 avec laquelle peuvent être prises des photographies 24 montrées sur l'écran 17.

Le dispositif mobile 3 comporte dans la mémoire programme 20 un programme principal 25 conditionnant son utilisation la plus courante. Par exemple ici le programme 25, intitulé GSM, est un programme de téléphonie mobile permettant au téléphone mobile 3 d'être utilisé de manière conventionnelle. Le dispositif 3 comporte par ailleurs d'autres sous-programmes, par exemple un sous-programme 26 de prise de photographies, un sous-programme 27 d'enregistrement cinématographique ou un sous-programme 28 d'enregistrement d'un son. D'une manière connue, la mémoire programme 20 comporte un sous-programme 29 d'édition pour éditer des photographies, un film ou des sons soit avec le téléphone mobile lui-même, soit à l'aide d'un organe d'édition distant, typiquement le dispositif 1.

Dans ce but, d'une manière connue, le dispositif mobile 3 comporte, dans la mémoire programme 20, un sous-programme 30 de connexion au dispositif 1. C'est lors d'une communication établie par une telle connexion que se produisent les désagréments que le procédé de l'invention permet d'éviter. Pour cette connexion, le dispositif fixe est approché du dispositif mobile à une distance permettant la communication radioélectrique ou filaire.

Par exemple, ce désagrément peut comporter la demande d'édition, selon le programme 29 et à partir du téléphone mobile 3, adressée à l'imprimante 6 pour imprimer la photographie 24 selon un format photographies d'identité. Un tel format comporte, par exemple l'impression de 16 photographies réduites sur la page 7. Si l'imprimante 6 est incapable d'effectuer cette mise au format réduit, elle imprime l'image 24 en une image grande 31 ne correspondant pas aux souhaits.

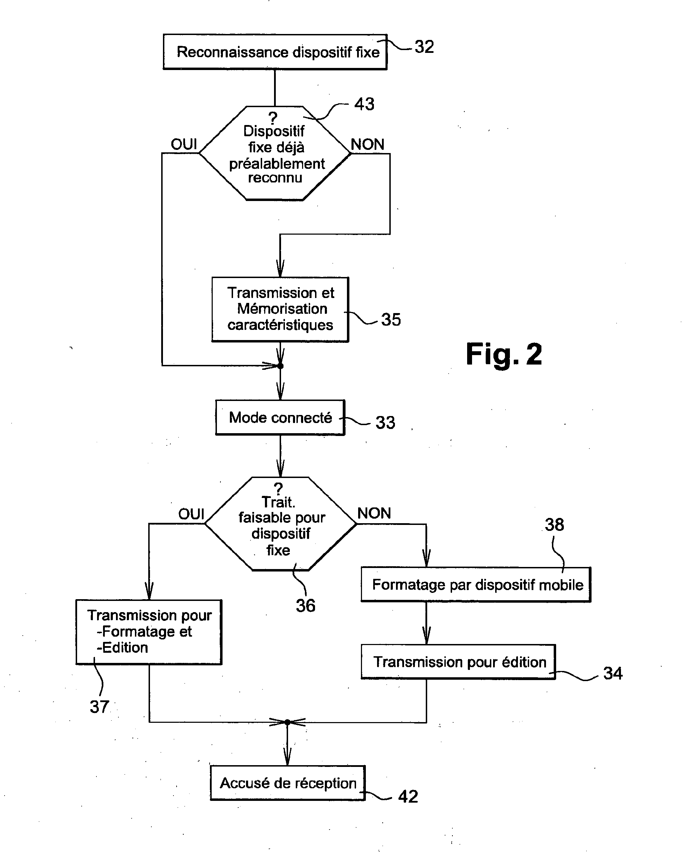

Dans l'invention, figure 2, on sait que pour communiquer l'un avec l'autre, le dispositif fixe 1 et le dispositif mobile 3 doivent se livrer à une reconnaissance 32 préalable. Une telle reconnaissance comporte une échange de signaux, radioélectriques dans les cadres Bluetooth, PPP, Wifi ou autres, ou filaire dans le cadre USB ou autre. Lors de cette reconnaissance, dans l'état de la technique, le dispositif d'édition 1 indique au dispositif émetteur 3 sa disponibilité. Eventuellement, cette reconnaissance comporte un échange d'indications relatives au protocole à utiliser pour la transmission 2 (ou 10) elle-même. Une fois que la reconnaissance 32 du dispositif fixe 1 par le dispositif mobile 3 est effectuée, dans l'état de la technique, le dispositif 1 et le dispositif mobile 3 sont dans un état connecté 33. Cet état est par exemple matérialisé par une disponibilité temporisée par un monostable (par exemple pendant un quart d'heure). Ou bien le mode connecté a une durée de disponibilité plus courte le conduisant à n'accepter des transmissions qu'en provenance du dispositif mobile 3. A partir de ce mode cou de cet état connecté, dans l'état de la technique, on transmet à partir du dispositif 3 par une étape 34 l'information à éditer, pour son édition par le dispositif fixe 1.

Dans l'invention, on interpose dans ce procédé une étape 35 intermédiaire. L'étape 35 est consécutive à une première reconnaissance 32. Au cours de l'étape 35, le dispositif fixe 1 transmet au dispositif mobile 3 ses caractéristiques d'édition, en définitive sa capacité à gérer ou non les informations à éditer. Typiquement, dans l'exemple présenté figure 1, au cours de l'étape 35, le dispositif 1 indique que l'imprimante 6 est ou n'est pas capable de produire l'image 7 au format réduit. Ou bien le dispositif 1 indique qu'il est seulement capable de produire l'image 31. En agissant ainsi, au cours de l'édition qui suivra, le dispositif mobile 3 pourra demander à l'utilisateur de choisir entre plusieurs modes d'édition.

Par exemple, premièrement, on peut toujours imaginer que le dispositif 3 proposera de forcer l'édition avec le dispositif 1, alors que celui-ci n'est pas adapté à l'édition voulue. Mais par contre, dans ce cas, le téléphone mobile 3 est informé, avant de lancer l'édition, du caractère mal adapté de l'édition choisie. Par exemple, on peut forcer l'édition de l'image 31 sachant que le dispositif 1 est incapable de l'image 7 en lançant une instruction d'imprimer l'image 7.

Toutefois, deuxièmement, pour tirer pleinement profit de l'invention, on prévoit, à titre de perfectionnement, dans le programme 29, d'ajouter une instruction 36 de test pour savoir si le travail demandé est faisable ou non par le dispositif fixe 1. Soit ce travail est possible, et dans ce cas, le dispositif mobile 3 transmet l'image 24 assortie d'une instruction d'avoir à la formater de la manière voulue. Dans ces conditions, le dispositif d'édition 1 exécute les ordres transportés par l'instruction 37. Selon ces ordres, il formate le signal reçu en fonction des instructions qui accompagnent ce signal. Le dispositif 1 édite ensuite le message sous sa forme attendue, ici par exemple sous la forme des photos d'identité de la page 7.

Si, à l'opposé, troisièmement, du fait des informations portées à la connaissance du dispositif mobile 3, le test 36 est négatif, on peut prévoir, plutôt que le forçage, de demander au téléphone mobile 3, au cours d'une étape 38, de formater lui-même le message (l'image 24) à transmettre. Ce formatage par le dispositif 3 est préalable à sa transmission effective au cours de l'étape 34. On comprend alors, si le téléphone mobile effectue dans le cas particulier visé la réduction de l'image 24 en seize petites images réduites, qu'il compose une image assemblée. Il est ensuite possible au téléphone mobile 3 de demander à l'imprimante 1 (qui n'est pas très capable) de produire quand même une image telle que 7, parce que tout le travail préparatoire aura été effectué préalablement par le téléphone mobile 3.

On comprend que le téléphone mobile 3 étant un organe plus petit, son processeur 13 sera moins performant qu'un processeur 39 de l'appareil fixe 1, en relation avec un système d'exploitation bien plus complet 40 de ce même dispositif fixe 1, par un bus 41 du même type que le bus 14.

Eventuellement, et si le dispositif 1 a montré qu'il en était capable, on peut lui demander, au moment des instructions qui lui sont envoyées, d'émettre au cours d'une étape 42, un accusé de réception, ou un message indiquant que le travail a été correctement effectué. Le dispositif fixe 3 est capable d'attendre ce message et de valider l'exécution de la tâche demandée si cet accusé de réception est reçu. Le dispositif 3 n'attend que s'il sait que le dispositif 1 est capable d'émettre un tel accusé.

On peut prévoir de provoquer l'opération 35 de transmission et de mémorisation des caractéristiques d'édition du dispositif mobile 1 à chaque reconnaissance 32. De préférence, afin de ne pas surcharger les échanges préalables 2 et/ou 10, on prévoit de faire suivre chaque reconnaissance 32 d'un test 43 par lequel le téléphone mobile 3 teste le fait d'avoir déjà reconnu antérieurement le dispositif fixe 1.

A cet effet, le dispositif fixe 1, au moment où il envoie ses caractéristiques, envoie aussi de préférence son identification, de manière à ce que cette identification soit affectée au dispositif d'édition 1, dans la mémoire de données 21 du dispositif mobile 3. Ainsi, la mémoire 21 comporte, dans l'exemple représenté, des enregistrements correspondant à des identifications et des caractéristiques d'édition relatives à deux imprimantes PT1 et PT2, à un dispositif de visualisation TV1, et à un dispositif de diffusion sonore HP1. Bien entendu, on peut enregistrer les caractéristiques de plus de quatre dispositifs d'édition dans la mémoire 21, en fonction des capacités de cette mémoire 21.

De même, en cas de perte de réseau très susceptible d'arriver compte tenu d'une faible portée, on peut prévoir que toute l'information de capacité échangée entre les terminaux, le dispositif fixe et le dispositif mobile, soit conservée. Ainsi on évite, grâce à l'identification, la phase d'enregistrement des terminaux distants. Cette procédure procure un gain en temps de travail des processeur et en énergie de part et d'autre de la liaison.

La relation d'identification avec les caractéristiques d'édition du dispositif mobile 1 n'est pas absolument nécessaire bien que très intéressante. En effet, si on imagine que le téléphone mobile 3 n'aura affaire qu'à un seul dispositif d'édition, on peut mémoriser les caractéristiques du dispositif d'édition 1 sans avoir à se préoccuper de l'identité de ce dernier.

De préférence, on mémorise des caractéristiques de plusieurs dispositifs fixes (PT1, PT2, TV1, HP1) dans le dispositif mobile, on présente à un utilisateur du dispositif mobile une liste d'informations représentatives de ceux de ces dispositifs fixes avec lesquels il est en état de connexion, et de préférence le dispositif fixe présenté en premier dans la liste est un dispositif le plus fréquemment utilisé.

Pour la mémorisation préalable, on aura pu, bien entendu, se servir aussi d'une liaison de type filaire 10, USB ou selon un autre protocole. Il serait cependant aussi envisageable de pré-enregistrer dans une mémoire du dispositif mobile 3 certaines caractéristiques de dispositifs d'édition (d'imprimante) les plus répandus. La caractéristique de l'invention demeurerait que, essentiellement, ces informations de caractéristiques d'édition seraient mémorisées dans le téléphone mobile avant l'édition.

Si l'étape 35 a déjà été lancée, bien entendu, au cours du test 33, on peut préférer aboutir directement dans l'étape du mode connecté 33.

A titre de perfectionnement, on peut prévoir, notamment si le téléphone mobile 3 est amené à entrer en relation fréquemment avec un dispositif d'édition 1 particulier, d'enregistrer, dans la mémoire 21, des profils utilisateurs.

Dans un exemple, pour des prises de vue de personnage, il peut importer d'effectuer les prises de vue en mode portrait et, par ailleurs, de rechercher les yeux rouges dans les images afin d'en traiter la couleur et d'en faire disparaître l'apparence disgracieuse. La question qui se pose est alors de savoir si le dispositif d'édition 1 est capable de faire le travail, ou s'il n'est pas capable. Notamment, pour le traitement des yeux rouges, des algorithmes mis en oeuvre sont assez complexes et conviennent mieux à un traitement par un microprocesseur 39 et une mémoire 40 puissants, qu'à un traitement par le microprocesseur 13 et le sous-programme 25, voire 26. Dans ces conditions, on peut enregistrer un profil utilisateur qui correspondra à des photographies de personnages d'une part et au dispositif d'édition particulier préféré 1. Pour des raisons de gestion, dans un menu du dispositif 3, ce profil, appelé par le sous-programme 25 ou 26 aura pour libellé un nom mnémonique correspondant à un personnage et au dispositif particulier visé.

Dans ce profil, en fonction du résultat du test 36 structurellement connu (puisque le dispositif d'édition est visé), on pourra prévoir soit de faire exécuter l'instruction 37 de transmission avec demande de formatage (la demande de formatage comportant, dans l'exemple, la mise au format portrait et le traitement des yeux rouges) et d'édition, à effectuer par le dispositif fixe 1.

Sinon, s'il est connu que le dispositif 1 n'est pas capable de faire ces traitements, le profil comportera les séquences d'instruction 38 et 34 de la figure 2.

En définitive, au moment où l'édition sera effectivement lancée, l'écran 17 du dispositif mobile 3 proposera à titre préférentiel (et dans ce cas, l'utilisateur n'a qu'à accepter les options qui lui sont proposées) l'exécution de l'instruction 37 ou l'exécution du formatage 38 et de la transmission ultérieure 34 selon le cas. Dans ce cas, la procédure d'édition sera simplifiée puisque, a priori, l'utilisateur peut se contenter d'appuyer sur une touche d'acceptation des options sans avoir à reparamétrer pour lancer tous les traitements désirables.

Plutôt que de mémoriser les informations ou les caractéristiques d'édition, voire de profil, dans la mémoire de données 21 du dispositif mobile 3, il est possible de les stocker dans la mémoire du dispositif amovible 22. Dans ce cas, le déplacement du circuit amovible 22 à un autre dispositif mobile 3 rend cet autre dispositif mobile 3 immédiatement communiquant avec les dispositifs fixes d'édition 1 préalablement reconnus.

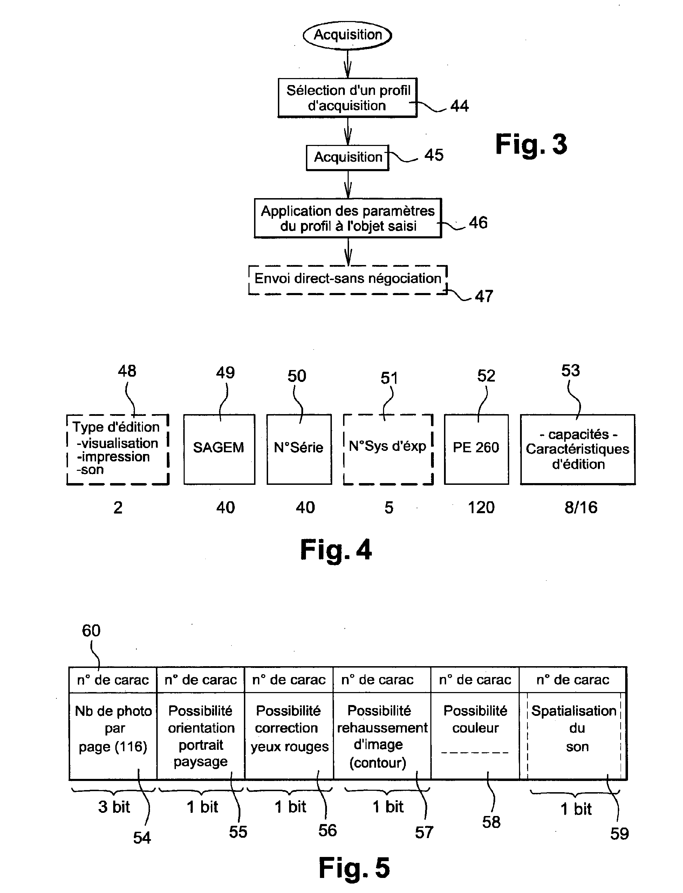

La figure 3 montre, pour une acquisition, typiquement une prise de vue photographique, la mise en oeuvre des instructions du programme 25 (ou des programmes 26 et 27 dans le cadre d'une acquisition d'un autre type) et correspondant à un profil PROFIL chargé dans la mémoire 21. Au cours d'une étape 44 de ce processus d'acquisition, l'utilisateur sélectionne avec le clavier 16 un profil utilisateur d'acquisition correspondant à un dispositif d'édition 1 préféré. Puis, au cours d'une étape 45, il se livre à une acquisition, typiquement, un cliché photographique est pris avec la caméra 23. Au moment de l'édition, au cours d'une étape 46, les paramètres de profil sont appliqués à l'objet saisi. Par exemple, l'image 24 est assortie d'instructions relatives à son orientation, relative aux yeux rouges et ainsi de suite. Ensuite, au cours d'une étape 47 simplifiée, l'utilisateur n'a qu'à accepter toutes les options qui lui sont proposées pour provoquer la transmission 37 (ou 34, 38).

Au cours de la transmission 35 de l'invention, le dispositif éditeur 1 transmet un message, figure 4, comportant un certain nombre d'informations d'identification. De préférence, les informations d'identification de ces messages concerneront un type 48 d'édition qu'est susceptible d'effectuer le dispositif d'édition 1. Par exemple, sur deux bits, le dispositif 1 indiquera qu'il est capable de proposer une visualisation, une impression ou du son.

Ce champ 48 définit de grandes catégories d'usage : Impression - Visualisation - Son. Il ne s'agit pas d'une discrimination fine mais un grand ensemble d'usage. Dans ce cas, la définition du champ sera "Catégorie d'usage". Il pourrait néanmoins être plus finement défini.

Dans un exemple sur 40 bits suivants 49, on indique le numéro du fabricant du dispositif fixe 1. Sur encore 40 bits suivants 50, on indique un numéro de série du dispositif fixe 1. Sur 5 bits suivants 51, de préférence, on désigne une version d'un système d'exploitation du dispositif 1, le système d'exploitation qui est chargé dans la mémoire 40. Sur 120 bits 52, on peut par ailleurs, à la suite, indiquer un nom générique du dispositif 1 d'édition. Bien entendu, l'ordre de ces 5 types d'information d'identification peut être omis, modifié, et ou les champs raccourcis ou allongés à la demande. Selon ce qui a été dit précédemment, on peut prévoir que tout ou partie seulement de ces informations d'identification sont envoyées au dispositif mobile 3 pour qu'il les associe aux caractéristiques d'édition.

Les caractéristiques d'édition 53, les capacités, montrées sur la figure 4 sont montrées en détail sur la figure 5. Elles comportent, par exemple sur 3 bits 54, le nombre de photos par page que le dispositif 1 est capable de produire à titre de réduction. Elles peuvent comporter, également sur un bit 55 la possibilité d'orienter les images en portrait ou en paysage. La valeur du bit à 1 signifie dans ce cas que la possibilité est offerte de recevoir une instruction de présentation en portrait ou en paysage. A l'opposé, bit 0 signifie que cette instruction ne sera pas comprise et donc pas traitée par le dispositif 1. De même, une possibilité de correction d'yeux rouges sur 1 bit 56 indiquera que le dispositif 1 sera capable d'effectuer cette correction ou non. Eventuellement un autre bit, ou une longueur de mot plus grande qu'un bit peut servir à indiquer quel type de correction d'yeux rouges est capable de faire le dispositif 1. Ou encore, le dispositif 1 indiquera sur un bit 57 son aptitude à rehausser l'image, notamment pour en augmenter la qualité des contours. S'il en est capable, le dispositif 3 pourra lui demander (ou non) ce traitement. Eventuellement, on peut prévoir que l'information caractéristique concerne l'aptitude 58 d'être une imprimante en couleur ou une imprimante noir et blanc seulement. Ainsi de suite, de nombreuses caractéristiques d'édition sont envisageables.

Dans d'autres domaines, celui de la visualisation, le dispositif 1 indiquera, à titre de format d'édition, par exemple le nombre d'images par seconde qu'il est susceptible de recevoir et de montrer, charge au téléphone mobile de produire les images d'une manière correspondante. Ou bien, dans le domaine du son, le son pourra être spatialisé 59 avec des effets sonores relatifs à la présence d'un nombre plus ou moins limité de haut-parleurs selon les cas.

On peut ainsi prévoir que les caractéristiques d'édition, les capacités du dispositif d'édition, 1 sont transmises par un complément de 8 à 16 bits dans le message d'information transmis et mémorisé au moment de l'étape 35. Sur le plan pratique, on peut prévoir que chaque type de caractéristique sera affecté d'un numéro 60, par exemple le nombre de photos par page sera affecté du numéro A, la possibilité d'orientation paysage sera affectée du numéro B et ainsi de suite. En pratique, le message transmis au dispositif mobile sera alors en longueur variable, seules les informations utiles pouvant être transmises, associées avec leur numéro de caractéristique. En retenant une représentation normalisée de ces numéros de caractéristique, on peut grandement simplifier le volume et la nature du message émis à l'occasion de l'instruction 35.

## Revendications

1. Procédé de communication (2) entre un dispositif fixe (1) éditeur et un dispositif mobile (3) émetteur comportant les étapes suivantes
- on provoque une reconnaissance (32) du dispositif fixe par le dispositif mobile,
- on établit un état (33) de connexion entre le dispositif fixe et le dispositif mobile,
- on transmet depuis le dispositif mobile des informations (24) à éditer au dispositif fixe,
- on mémorise dans le dispositif mobile des caractéristiques d'édition du dispositif fixe,
**caractérisé en ce qu'**il comporte une étape dans laquelle
- on produit un profil utilisateur (PROFIL) de type d'acquisition d'information avec le dispositif mobile,
- ce profil utilisateur correspondant à un dispositif fixe préféré,
**en ce que** ledit dispositif mobile effectue une acquisition d'un objet,
et **en ce que** ledit profil utilisateur contient des paramètres qui sont appliqués à l'objet saisi afin de produire les informations à éditer.

2. Procédé selon la revendication 1, **caractérisé en ce qu'**il comporte une étape selon laquelle
- le dispositif fixe transmet (35) au dispositif mobile des caractéristiques d'édition au moment de la reconnaissance.

3. Procédé selon la revendication 1, **caractérisé en ce qu'**il comporte des étapes dans lesquelles
- le dispositif fixe transmet au dispositif mobile des caractéristiques d'édition avant une reconnaissance,
- et les caractéristiques d'édition ne sont pas transmises (43) au dispositif mobile au cours d'une reconnaissance ultérieure si elles l'ont déjà été.

4. Procédé selon l'une des revendications 1 à 3, **caractérisé en ce qu'**il comporte une étape selon laquelle
- avant la transmission des informations à éditer du dispositif mobile au dispositif fixe,
- on formate (38), dans le dispositif mobile, les informations à éditer en fonction des caractéristiques d'édition du dispositif fixe.

5. Procédé selon l'une des revendications 1 à 4, **caractérisé en ce que**
- le profil d'acquisition comporte une procédure simplifiée d'édition avec le dispositif fixe préféré.

6. Procédé selon l'une des revendications 1 à 5, **caractérisé en ce qu'**il comporte une étape selon laquelle
- on mémorise les caractéristiques d'édition dans un circuit (22) électronique amovible du dispositif mobile.

7. Procédé selon l'une des revendications 1 à 6, **caractérisé en ce qu'**il comporte une étape selon laquelle
- on mémorise les caractéristiques d'édition au cours d'une liaison (10) utilisant un protocole d'échange complexe permettant l'échange d'informations riches.

8. Procédé selon l'une des revendications 1 à 7, **caractérisé en ce qu'**il comporte une étape selon laquelle
- on mémorise les caractéristiques d'édition au cours d'une liaison (10) de type filaire, ou
- on mémorise les caractéristiques d'édition par une liaison (2) de type radioélectrique, pour cette dernière de préférence de type Bluetooth ou Wifi.

9. Procédé selon l'une des revendications 1 à 8, caractérisé en ce les caractéristiques d'édition comportent en sus des informations de caractéristique d'édition, une identification comportant une ou plusieurs des informations suivantes
- une information de type (48) d'édition effectuée par le dispositif fixe,
- une information de nom (49) de fabricant du dispositif fixe,
- une information de numéro de série (50) du dispositif fixe,
- une information de version (51) d'un système d'exploitation du dispositif fixe,
- une information de type (52) du dispositif fixe.

10. Procédé selon l'une des revendications 1 à 9, **caractérisé en ce qu'**il comporte des étapes selon lesquelles
- on mémorise des caractéristiques de plusieurs dispositifs fixes (PT1, PT2, TV1, HP1) dans le dispositif mobile,
- on présente à un utilisateur du dispositif mobile une liste d'informations représentatives de ceux de ces dispositifs fixes avec lesquels il est en état de connexion, et
- de préférence le dispositif fixe présenté en premier dans la liste est un dispositif le plus fréquemment utilisé.

11. Procédé selon l'une des revendications 1 à 10, **caractérisé en ce qu'**il comporte des étapes selon lesquelles
- le dispositif fixe transmet (42) au dispositif mobile une information d'accusé de réception des informations à éditer.

12. Procédé selon l'une des revendications 1 à 11, **caractérisé en ce que** le dispositif mobile est un téléphone mobile.

13. Procédé selon l'une des revendications 1 à 12, **caractérisé en ce que** le dispositif fixe est une imprimante.

14. Procédé selon l'une des revendications 1 à 13, **caractérisé en ce que**
- on associe à chaque caractéristique d'édition du dispositif fixe une information de numéro de caractéristique, et
- on envoie ce numéro (60) et ces caractéristiques au dispositif mobile pour la mémorisation.

## Patentansprüche

1. Verfahren zur Kommunikation (2) zwischen einer festen Editiervorrichtung (1) und einer beweglichen Sendevorrichtung (3), umfassend die folgenden Schritte:
- Bewirken eines Erkennens (32) der festen Vorrichtung durch die bewegliche Vorrichtung,
- Herstellen eines Verbindungszustands (33) zwischen der festen Vorrichtung und der beweglichen Vorrichtung,
- Übertragen der zu editierenden Informationen (24) von der beweglichen Vorrichtung auf die feste Vorrichtung,
- Speichern der Editiermerkmale der festen Vorrichtung in der beweglichen Vorrichtung,
**dadurch gekennzeichnet, dass** es einen Schritt umfasst, bei dem
- ein Benutzerprofil (PROFIL) des Typs Informationserfassung mit der beweglichen Vorrichtung erstellt wird,
- wobei dieses Benutzerprofil einer bevorzugten festen Vorrichtung entspricht,
dass die bewegliche Vorrichtung eine Erfassung eines Objekts durchführt,
und dass das Benutzerprofil Parameter enthält, die an das erfasste Objekt angelegt werden, um die zu editierenden Informationen zu erzeugen.

2. Verfahren nach Anspruch 1, **dadurch gekennzeichnet, dass** es einen Schritt umfasst, bei dem
- die feste Vorrichtung an die bewegliche Vorrichtung Editiermerkmale zum Zeitpunkt des Erkennens übermittelt (35).

3. Verfahren nach Anspruch 1, **dadurch gekennzeichnet, dass** es Schritte umfasst, bei denen
- die feste Vorrichtung an die bewegliche Vorrichtung Editiermerkmale vor einem Erkennen übermittelt,
- und die Editiermerkmale nicht an die bewegliche Vorrichtung während eines späteren Erkennens übermittelt werden (43), wenn dies bereits erfolgt ist.

4. Verfahren nach einem der Ansprüche 1 bis 3, **dadurch gekennzeichnet, dass** es einen Schritt umfasst, bei dem
- vor der Übertragung der zu editierenden Informationen von der beweglichen Vorrichtung an die feste Vorrichtung
- in der beweglichen Vorrichtung die zu editierenden Informationen in Abhängigkeit von den Editiermerkmalen der festen Vorrichtung formatiert werden (38).

5. Verfahren nach einem der Ansprüche 1 bis 4, **dadurch gekennzeichnet, dass**
- das Erfassungsprofil ein vereinfachtes Editierverfahren mit der bevorzugten festen Vorrichtung umfasst.

6. Verfahren nach einem der Ansprüche 1 bis 5, **dadurch gekennzeichnet, dass** es einen Schritt umfasst, bei dem
- die Editiermerkmale in einer abnehmbaren elektronischen Schaltung (22) der beweglichen Vorrichtung gespeichert werden.

7. Verfahren nach einem der Ansprüche 1 bis 6, **dadurch gekennzeichnet, dass** es einen Schritt umfasst, bei dem
- die Editiermerkmale während einer Verbindung (10) gespeichert werden, die ein komplexes Austauschprotokoll verwendet, das den Austausch von reichhaltigen Informationen ermöglicht.

8. Verfahren nach einem der Ansprüche 1 bis 7, **dadurch gekennzeichnet, dass** es einen Schritt umfasst, bei dem
- die Editiermerkmale während einer Verbindung (10) des Typs Drahtverbindung gespeichert werden, oder
- die Editiermerkmale durch eine Verbindung (2) des Typs funkelektrische Verbindung gespeichert werden, vorzugsweise des Typs Bluetooth oder Wifi.

9. Verfahren nach einem der Ansprüche 1 bis 8, **dadurch gekennzeichnet, dass** die Editiermerkmale zusätzlich zu den Editiermerkmalsinformationen eine Identifikation umfassen, die eine oder mehrere der folgenden Informationen umfassen
- eine Information zum Editionstyp (48), die von der festen Vorrichtung durchgeführt wird,
- eine Information zum Herstellernamen (49) der festen Vorrichtung,
- eine Information zur Seriennummer (50) der festen Vorrichtung,
- eine Information zur Version (51) eines Betriebssystems der festen Vorrichtung,
- eine Information zum Typ der festen Vorrichtung (52).

10. Verfahren nach einem der Ansprüche 1 bis 9, **dadurch gekennzeichnet, dass** es die Schritte umfasst, bei denen
- Merkmale mehrerer fester Vorrichtungen (PT1, PT2, TV1, HP1) in der beweglichen Vorrichtung gespeichert werden,
- einem Benutzer der beweglichen Vorrichtung eine Liste von Informationen vorgelegt wird, die für jene jener festen Vorrichtungen, mit denen sie im Verbindungszustand ist, repräsentativ sind, und
- vorzugsweise die als erste in der Liste präsentierte feste Vorrichtung eine am häufigsten verwendete Vorrichtung ist.

11. Verfahren nach einem der Ansprüche 1 bis 10, **dadurch gekennzeichnet, dass** es die Schritte umfasst, bei denen
- die feste Vorrichtung an die bewegliche Vorrichtung eine Information über eine Empfangsbestätigung der zu editierenden Informationen übermittelt (42).

12. Verfahren nach einem der Ansprüche 1 bis 11, **dadurch gekennzeichnet, dass** die bewegliche Vorrichtung ein Mobiltelefon ist.

13. Verfahren nach einem der Ansprüche 1 bis 12, **dadurch gekennzeichnet, dass** die feste Vorrichtung ein Drucker ist.

14. Verfahren nach einem der Ansprüche 1 bis 13, **dadurch gekennzeichnet, dass**
- jedem Editiermerkmal der festen Vorrichtung eine Information zur Nummer des Merkmals zugeordnet wird, und
- diese Nummer (60) und diese Merkmale an die bewegliche Vorrichtung zur Speicherung gesandt werden.

## Claims

1. Method for communication (2) between a fixed editing device (1) and a mobile transmitting device (3) comprising the following steps:
- causing a recognition (32) of the fixed device by the mobile device,
- establishing a connection state (33) between the fixed device and the mobile device,
- transmitting information (24) to be edited from the mobile device to the fixed device,
- storing editing characteristics of the fixed device in the mobile device,
**characterized in that** it comprises a step in which:
- a user profile (PROFIL) of the information acquisition type is produced with the mobile device,
- this user profile corresponding to a preferred fixed device,
**in that** said mobile device carries out an acquisition of an object,
and **in that** said user profile contains parameters which are applied to the acquired object in order to produce the information to be edited.

2. Method according to claim 1, **characterized in that** it comprises a step according to which:
- the fixed device transmits (35) editing characteristics to the mobile device at the time of the recognition.

3. Method according to claim 1, **characterized in that** it comprises steps in which:
- the fixed device transmits editing characteristics to the mobile device before a recognition,
- and the editing characteristics are not transmitted (43) to the mobile device during a subsequent recognition if they have already been transmitted.

4. Method according to one of claims 1 to 3, **characterized in that** it comprises a step according to which:
- before the transmission of the information to be edited from the mobile device to the fixed device,
- the information to be edited is formatted (38) in the mobile device according to editing characteristics of the fixed device.

5. Method according to one of claims 1 to 4, **characterized in that**
- the acquisition profile comprises a simplified editing procedure with the preferred fixed device.

6. Method according to one of claims 1 to 5, **characterized in that** it comprises a step according to which:
- the editing characteristics are stored in a removable electronic circuit (22) of the mobile device.

7. Method according to one of claims 1 to 6, **characterized in that** it comprises a step according to which:
- the editing characteristics are stored during a link (10) using a complex exchange protocol enabling the exchange of rich information.

8. Method according to one of claims 1 to 7, **characterized in that** it comprises a step according to which:
- the editing characteristics are stored during a wired link (10), or
- the editing characteristics are stored by a radio link (2), for the latter preferably of the Bluetooth or Wi-Fi type.

9. Method according to one of claims 1 to 8, **characterized in that** the editing characteristics comprise, in addition to the editing characteristic information, an identification comprising one or more of the following information elements:
- an information element (48) indicating the type of editing carried out by the fixed device,
- an information element (49) indicating the name of the manufacturer of the fixed device,
- an information element (50) indicating the serial number of the fixed device,
- an information element (51) indicating the version of an operating system of the fixed device,
an information element (52) indicating the type of the fixed device.

10. Method according to one of claims 1 to 9, **characterized in that** it comprises steps according to which:
- characteristics of a plurality of fixed devices (PT1, PT2, TV1, HP1) are stored in the mobile device,
- a list of information elements representing those of these fixed devices with which it is in a connection state is presented to a user of the mobile device, and
- the fixed device presented first in the list is preferably a most frequently used device.

11. Method according to one of claims 1 to 10, **characterized in that** it comprises steps according to which:
- the fixed device transmits (42) an information element acknowledging receipt of the information to be edited.

12. Method according to one of claims 1 to 11, **characterized in that** the mobile device is a mobile telephone.

13. Method according to one of claims 1 to 12, **characterized in that** the fixed device is a printer.

14. Method according to one of claims 1 to 13, **characterized in that**:
- a characteristic number information element is associated with each editing characteristic of the fixed device, and
- this number (60) and these characteristics are sent to the mobile device for storage.
